(19) Europäisches Patentamt
European Patent Office
Office européen des brevets

(11) EP 1 371 508 A1

(12) **EUROPÄISCHE PATENTANMELDUNG**

(43) Veröffentlichungstag:
**17.12.2003 Patentblatt 2003/51**

(51) Int Cl.⁷: **B60G 17/00**, B60G 17/015

(21) Anmeldenummer: 03006689.8

(22) Anmeldetag: **26.03.2003**

| | |
|---|---|
| (84) Benannte Vertragsstaaten:<br>**AT BE BG CH CY CZ DE DK EE ES FI FR GB GR HU IE IT LI LU MC NL PT RO SE SI SK TR**<br>Benannte Erstreckungsstaaten:<br>**AL LT LV MK**<br><br>(30) Priorität: **11.06.2002 DE 10225940** | (71) Anmelder: **Continental Aktiengesellschaft**<br>**30165 Hannover (DE)**<br><br>(72) Erfinder:<br>• **Schaumburg, Harald**<br>**31157 Sarstedt (DE)**<br>• **Stiller, Alexander, Dr.**<br>**30823 Garbsen (DE)** |

(54) **Verfahren zur Regelung einer Niveauregelanlage**

(57) Die Erfindung betrifft ein Verfahren zur Regelung einer Niveauregelanlage, mit der der Abstand eines Fahrzeugaufbaus eines Kraftfahrzeuges zumindestens einer Achse (4a,4b) des Kraftfahrzeuges mit Hilfe mindestens eines Höhensensors (16-22), der den Abstand zwischen dem Fahrzeugaufbau und der Fahrzeugachse (4a,4b) misst, auf ein Sollniveau geregelt wird, wobei

- die Fahrtrichtung des Kraftfahrtzeuges bestimmt wird und
- bei einer Rückwärtsfahrt des Kraftfahrzeuges das Messsignal des Höhensensors (16-22) in Richtung des Sollniveaus korrigiert wird.

FIG. 1

**Beschreibung**

Die Erfindung betrifft ein Verfahren zur Regelung einer Niveauregelanlage, mit der der Abstand eines Fahrzeugaufbaus eines Kraftfahrzeuges zu mindestens einer Achse des Kraftfahrzeuges mit Hilfe mindestens eines Höchensensors, der den Abstand zwischen dem Fahrzeugaufbau und der Fahrzeugachse misst, auf ein Sollniveau geregelt wird.

Niveauregelanlagen, mit denen der Abstand eines Fahrzeugaufbaus eines Kraftfahrzeuges zu mindestens einer Achse des Kraftfahrzeuges geregelt wird, sind seit langem bekannt und werden insbesondere in Form von Luftfederungsanlagen in moderne Kraftfahrzeuge eingebaut. Hierbei wird bei Transportfahrzeugen mit Hilfe der Luftfederungsanlage häufig nur das Niveau der Hinterachse geregelt, wohingegen insbesondere bei geländegängigen Fahrzeugen mit Hilfe der Niveauregelanlage das Niveau beider Achsen des Kraftfahrzeuges geregelt wird.

Insbesondere bei höheren Fahrzeuggeschwindigkeiten kann es bei modernen Kraftfahrzeugen z. B. aufgrund ihrer Aerodynamik dazu kommen, dass sich der Aufbau des Kraftfahrzeuges absenkt oder anhebt, so dass sich der Schwerpunkt (im Fall einer Absenkung) des Kraftfahrzeuges nach unten verlagert und das Kraftfahrzeug dadurch eine bessere Straßenlage bekommt. In einem solchen Zustand des Kraftfahrzeuges messen die Höhensensoren der Niveauregelanlage einen Abstand des Fahrzeugaufbaus zu den Achsen, der unterhalb des Sollniveaus liegt. Bei hohen Fahrzeuggeschwindigkeiten wird das Messsignal der Höhensensoren dahingehend korrigiert, dass es mit dem Messsignal des Sollniveaus übereinstimmt, so dass die Niveauregelanlage bei hohen Fahrzeuggeschwindigkeiten die Niveaulage nicht in die Solllage nachregelt. Dadurch wird erreicht, dass die oben beschriebene Absenkung des Schwerpunktes des Kraftfahrzeuges erhalten bleibt.

Zusätzlich wirken in bestimmten Fahrsituationen auf das Kraftfahrzeug positive oder negative Beschleunigungen ein, die dazu führen können, dass der Fahrzeugaufbau im Bereich der Vorderachse angehoben und im Bereich der Hinterachse abgesenkt wird (beim positiven Beschleunigen) bzw. umgekehrt bei negativen Beschleunigungen. Wenn eine Niveauregelanlage bei einer derartigen Ausrichtung des Fahrzeugaufbaus das Sollniveau regeln würde, würde dies bei einer positiven Beschleunigung dazu führen, dass es im Bereich der Vorderachse abgesenkt und Bereich der Hinterachse angehoben werden würde (bei einer negativen Beschleunigung entsprechend umgekehrt). Nach Abschluss des (positiven) Beschleunigungsvorganges, der meist nur über eine kurze Zeit andauert, würde dies dazu führen, dass sich der Fahrzeugaufbau im Bereich der Vorderachse unterhalb des Sollniveaus und im Bereich der Hinterachse oberhalb des Sollniveaus liegen würde. Aus diesem Grunde wäre unmittelbar nach Abschluss des Beschleunigungsvorganges eine erneute Regelung notwendig. In modernen Niveauregelanlagen werden während der Beschleunigungsvorgänge des Kraftfahrzeuges die von den Höhensensoren gemessenen Messwerte entsprechend angepasst, um den oben erläuterten unerwünschten Ausgleich des Kraftfahrzeuges während des Beschleunigungsvorganges an das Sollniveau zu unterbinden. Bei einer positiven Beschleunigung des Kraftfahrzeuges wird der an der Vorderachse gemessene Wert eines Höhensensors also nach unten korrigiert und der an der Hinterachse gemessene Wert eines Höhensensors entsprechend nach oben (umgekehrt sind die Verhältnisse bei einer negativen Beschleunigung). Damit können unnötige Regelvorgänge vermieden werden.

Bei einer Rückwärtsfahrt des Kraftfahrzeuges hingegen sind die Verhältnisse anders. Findet z. B. bei einer Rückwärtsfahrt des Kraftfahrzeuges eine positive Beschleunigung statt, so führt dies dazu, dass sich der Fahrzeugaufbau des Kraftfahrzeuges im Bereich der Vorderachse unter das Sollniveau absenkt, wohingegen der Fahrzeugaufbau im Bereich der Hinterachse über das Sollniveau angehoben wird. Dies wird auch von den Höhensensoren im Bereich der Achsen registriert. Werden die Höhensignale der Messsensoren nun in der für die positiven Beschleunigungen oben erläuterten Art und Weise korrigiert, führt dies dazu, dass das Messsignal für die Vorderachse weiter erniedrigt, wohingegen das Messsignal für die Hinterachse weiter erhöht wird. Die Niveauregelanlage wird daraufhin den Fahrzeugaufbau im Bereich der Vorderachse während des Beschleunigungsvorganges stark anheben und im Bereich der Hinterachse stark absenken. Dies führt nach Abschluss des positiven Beschleunigungsvorganges dazu, dass sich der Fahrzeugaufbau im Bereich der Vorderachse deutlich oberhalb des Sollniveaus befindet, wohingegen er sich im Bereich der Hinterachse deutlich unterhalb des Sollniveaus befindet. Nach Abschluss des (meist kurzen) Beschleunigungsvorganges ist daher wieder eine starke Korrektur des Niveaus des Fahrzeugaufbaus im Bereich beider Achsen notwendig. Somit treten während der Rückwärtsfahrt moderner Kraftfahrzeuge häufig unnötige Regelvorgänge auf.

Der Erfindung liegt die Aufgabe zugrunde, ein Verfahren zur Regelung einer Niveauregelanlage zu schaffen, mit dem auch bei einer Rückwärtsfahrt des Kraftfahrzeuges weitgehend sichergestellt ist, dass in der Niveauregelanlage keine unnötigen Regelvorgänge vorgenommen werden.

Gemäß den kennzeichnenden Merkmalen des Anspruchs 1 wird die Aufgabe dadurch gelöst, dass

- die Fahrtrichtung des Kraftfahrzeuges bestimmt wird und
- bei einer Rückwärtsfahrt des Kraftfahrzeuges das Messsignal eines jeden Höhensensors in Richtung des Sollniveaus korrigiert wird.

Der mit der Erfindung erzielte Vorteil ist insbesondere darin zu sehen, dass es auch bei einer Rückwärtsfahrt des Kraftfahrzeuges zu nicht mehr unnötigen Regelvorgängen der Niveauregelanlage kommt. Somit werden sowohl während der Vorwärtsfahrt als auch während der Rückwärtsfahrt des Kraftfahrzeuges unnötige Regelvorgänge in der Niveauregelanlage unterbunden. Kommt es beispielsweise aufgrund einer Rückwärtsfahrt mit einer relativ hohen Geschwindigkeit aufgrund der Aerodynamik des Kraftfahrzeuges zu einer Anhebung des Fahrzeugaufbaus, so werden die Messsignale eines jeden Höhensensors in der Niveauregelanlage in Richtung des Sollniveaus korrigiert (d. h. das aktuelle Messsignal eines jeden Höhensensors wird in Richtung des Messsignals eines jeden Höhensensors angepasst, die dieser im Sollniveau anzeigen würde (im genannten Beispiel also erniedrigt)).

Gemäß einer Weiterbildung der Erfindung nach Anspruch 2 wird die Korrektur der Messsignale eines jeden Höhensensors in Abhängigkeit von der Geschwindigkeit des Kraftfahrzeuges vorgenommen. Der mit dieser Weiterbildung erzielte Vorteil ist darin zu sehen, dass unnötige Regelvorgänge in der Niveauregelanlage, die auf eine konstante Geschwindigkeit des Kraftfahrzeuges zurückzuführen sind, vermieden werden.

Gemäß einer Weiterbildung der Erfindung nach Anspruch 3 wird die Beschleunigung des Kraftfahrzeuges gemessen und die Korrektur der Messsignale eines jeden Höhensensors wird in Abhängigkeit von der Beschleunigung des Kraftfahrzeuges vorgenommen. Der Vorteil dieser Weiterbildung ist darin zu sehen, dass bei einer Rückwärtsfahrt des Kraftfahrzeuges unnötige Regelvorgänge innerhalb der Niveauregelanlage weitestgehend unterdrückt werden, die auf eine positive oder negative Beschleunigung des Kraftfahrzeuges zurückzuführen sind. Das Verfahren gemäß Anspruch 3 kann alternativ zum Verfahren nach Anspruch 2 (in diesem Fall werden ausschließlich die unnötigen Regelvorgänge unterdrückt, die auf eine Beschleunigung des Kraftfahrzeuges zurückzuführen sind) oder zusätzlich zu dem Verfahren nach Anspruch 2 ausgeführt werden (in diesem Fall werden geschwindigkeits- und beschleunigungsbedingte unnötige Regelungen innerhalb der Niveauregelanlage weitestgehend unterdrückt).

Gemäß einer Weiterbildung der Erfindung nach Anspruch 4 ist in der Zentraleinheit der Niveauregelanlage eine Tabelle gespeichert, in der für bestimmte rückwärtsgerichtete Geschwindigkeiten und/oder für bestimmte Beschleunigungen diesen jeweils zugeordnete Korrekturwerte für die Messsignale eines jeden Höhensensors abgelegt sind. Der Vorteil dieser Weiterbildung ist darin zu sehen, dass die Korrekturwerte für die Messsignale den Tabellen auf einfache Art und Weise entnommen werden können und somit ohne aufwendige Rechenvorgänge zur Verfügung stehen, so dass die notwendigen Korrekturen ohne unnötigen Zeitverzug vorgenommen werden können. Vorzugsweise werden die Korrekturwerte bereits bei der Herstellung des Kraftfahrzeuges in der Tabelle gespeichert.

Die Korrekturwerte werden bevorzugt für eine durchschnittliche Beladung des Kraftfahrzeuges festgelegt und gespeichert. Weicht die Beladung des Kraftfahrzeuges später während der Fahrt von der durchschnittlichen Beladung (z. B. aufgrund einer starken Zuladung) ab, so führt dies dazu, dass die Niveauregelanlage die aufgrund der abweichenden Beladung auftretende Abweichung vom Sollniveau durch eine Regelung ausgleicht. Die aufgrund der abweichenden Beladung vorgenommene Regelung wird auch z. B. während einer Rückwärtsfahrt und einer starken positiven Beschleunigung vorgenommen, da die der Tabelle für den Fall entnommenen Korrekturwerte sich auf die durchschnittliche Beladung beziehen (näheres s. Figurenbeschreibung).

Gemäß einer Weiterbildung der Erfindung nach Anspruch 5 wird für nicht in der Tabelle enthaltene Geschwindigkeiten bzw. Beschleunigungen der Korrekturwert durch lineare Interpolation zwischen denjenigen Korrekturwerten bestimmt, die den Geschwindigkeiten bzw. Beschleunigungen zugeordnet sind, zwischen denen die aktuelle Geschwindigkeit bzw. Beschleunigung liegt. Der Vorteil dieser Weiterbildung ist darin zu sehen, dass auch für die nicht hinterlegten Geschwindigkeiten bzw. Beschleunigungen auf einfache Art und Weise ohne großen Rechenaufwand Korrekturwerte in kurzer Zeit bestimmt werden können.

Gemäß einer Weiterbildung der Erfindung nach Anspruch 6 wird die Fahrtrichtung des Kraftfahrzeuges anhand der Getriebestellung des Fahrzeuggetriebes festgestellt. Befindet sich das Getriebe im Rückwärtsgang, so kann daraus geschlossen werden, dass das Fahrzeug rückwärts fährt, wenn es sich nicht im Stillstand befindet. Befindet sich das Getriebe hingegen in einem der Vorwärtsgänge, so kann daraus entsprechend geschlossen werden, dass das Fahrzeug vorwärts fährt, wenn es nicht stillsteht. Ein entsprechendes Signal wird über einen CAN-Bus an die Zentraleinheit der Niveauregelanlage weitergegeben, so dass dort ein entsprechendes Signal vorliegt. Der Vorteil der Weiterbildung ist darin zu sehen, dass die Fahrtrichtung des Kraftfahrzeuges auf einfache Art und Weise feststellbar ist.

Gemäß einer Weiterbildung der Erfindung nach Anspruch 7 wird die Beschleunigung des Kraftfahrzeuges bestimmt, indem zu zwei Zeitpunkten der Differenzenquotient aus den Geschwindigkeiten (zu diesen Zeitpunkten) und den Zeitpunkten bestimmt wird. Der Vorteil dieser Weiterbildung ist darin zu sehen, dass die Beschleunigung des Kraftfahrzeuges mit Hilfe des Differenzenquotienten auf einfache Art und Weise bestimmbar ist.

Gemäß einer Weiterbildung der Erfindung nach Anspruch 8 werden die Messsignale der Höhensensoren auf das Sollniveau korrigiert. Auch hier werden die Korrekturwerte, die zu einer Korrektur der Messsignale auf das Sollniveau führen, vorzugsweise auf eine durchschnittliche Beladung des Kraftfahrzeuges bezogen. Der Vorteil dieser Weiterbildung ist darin zu sehen, dass in der Niveauregelanlage während der gesamten (beschleunigten) Rückwärtsfahrt der "Eindruck" entsteht, dass sich der Fahrzeugaufbau im Sollniveau befindet und somit in der Niveauregelanlage keine unnötigen Regelvorgänge vorgenommen werden, die auf den Fahrzeugstand des Kraftfahrzeuges zurückzuführen sind. Weicht der Beladungszustand des Kraftfahrzeuges hingegen von dem durchschnittlichen Beladungszustand ab (auf den sich die Korrekturwerte beziehen), so wird eine aufgrund des abweichenden Beladungszustandes sich ergebende Abweichung des Niveaus vom Sollniveau durch eine Regelung durch die Niveauregelanlage ausgeglichen.

Gemäß einer Weiterbildung der Erfindung nach Anspruch 9 wird eine Messung und Korrektur der Messsignale eines jeden Höhensensors kontinuierlich oder in einem zeitlichen Abstand vorgenommen, der vorzugsweise zwischen 0,01 und 10 Sekunden (vorzugsweise zwischen 0,01 und 1 Sekunde) liegt. Der Vorteil dieser Weiterbildung ist darin zu sehen, dass eine Korrektur der Messsignale nicht zeitversetzt zum aktuellen Fahrzustand des Kraftfahrzeuges vorgenommen wird, so dass es aufgrund einer solchen unerwünschten Zeitversetzung nicht zu falschen Regelungen innerhalb der Niveauregelanlage kommen kann.

Ein Ausführungsbeispiel und weitere Vorteile der Erfindung werden im Zusammenhang mit den nachstehenden Figuren erläutert, darin zeigt:

Fig. 1 eine Niveauregelanlage in schematischer Darstellung
Fig. 2 eine Tabelle.

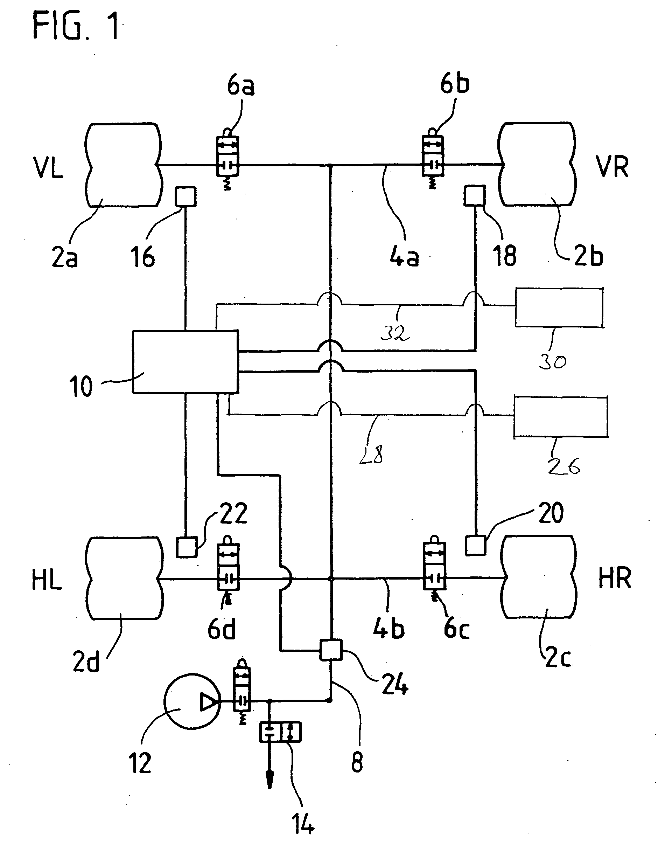

Figur 1 zeigt in stark schematisierter Darstellung eine Niveauregelanlage in Form einer Luftfederungsanlage für ein Kraftfahrzeug, wobei nur die für die nachfolgenden Erläuterungen notwendigen Bestandteile gezeigt sind. Die Luftfederungsanlage verfügt über Luftfedern 2a, 2b, die der Vorderachse des Kraftfahrzeuges zugeordnet sind, und über Luftfedern 2c, 2d, die der Hinterachse des Kraftfahrtzeuges zugeordnet sind. Mit den Luftfedern 2a bis 2d ist ein (nicht gezeigter) Fahrzeugaufbau des Kraftfahrzeuges gegenüber den Achsen federnd gelagert. Die Luftfedern 2a, 2b stehen über eine Querleitung 4a und die Luftfedern 2c, 2d über eine Querleitung 4b miteinander in Verbindung. Jede Querleitung 4a, 4b enthält zwei Quersperrventile 6a, 6b und 6c, 6d, von denen jeweils eins einer Luftfeder 2a bis 2d zugeordnet ist. Darüber hinaus steht die Querleitung 4a, 4b mit einer weiteren Leitung 8 in Verbindung, über die die Luftfedern 2a bis 2d mit Hilfe des Kompressors 12 mit Druckluft befüllt werden bzw. über die Druckluft aus den Luftfedern 2a bis 2d über das Ventil in die Atmosphäre abgelassen wird. Dazu werden von der Zentraleinheit 10 der Luftfederungsanlage die Steuereingänge der entsprechenden Ventile 6a bis 6d, 14 und der Kompressor 12 angesteuert. Durch die in der Figur 1 gezeigte Niveauregelanlage kann in an sich bekannter Art und Weise das Sollniveau des Fahrzeugaufbaus unabhängig vom Beladungszustand des Kraftfahrzeuges eingehalten werden.

Zusätzlich zu den oben genannten Bestandteilen verfügt das Kraftfahrzeug über ein schematisch dargestelltes Getriebe 26, von dem aus über eine Signalleitung 28 ein Signal an die Zentraleinheit 10 gegeben wird, ob sich das Getriebe im Rückwärtsgang oder in einem Vorwärtsgang befindet. Ferner verfügt das Kraftfahrzeug über ein Einheit 30, mit der die Geschwindigkeit v des Kraftfahrzeuges bestimmt wird, die über eine Signalleitung 32 ebenfalls an die Zentraleinheit 10 der Niveauregelanlage übermittelt wird. Somit kann in der Zentraleinheit 10 festgestellt werden, mit welcher Geschwindigkeit v das Kraftfahrzeug rückwärts fährt. In diesem Fall wird nämlich über die Signalleitung 28 ein Signal für den Rückwärtsgang des Getriebes 26 an die Zentraleinheit 10 weitergegeben und über die Signalleitung 32 eine bestimmte Geschwindigkeit v des Kraftfahrzeuges, die ungleich 0 ist.

Darüber hinaus kann in der Zentraleinheit 10 die Beschleunigung des Kraftfahrzeuges festgestellt werden, indem die Geschwindigkeit v1 zu einem Zeitpunkt t1 und die Geschwindigkeit v2 des Kraftfahrzeuges zu einem späteren Zeitpunkt t2 bestimmt wird und daraufhin der Differenzenquotient dv/dt = v2-v1/t2-t1 gebildet wird. Je näher die Zeiten t2 und t1 zusammenliegen, desto genauer wird durch die Berechnung des Differenzenquotienten die momentane Beschleunigung des Kraftfahrzeuges festgestellt. Aus dem Vorzeichen des Differenzenquotienten kann festgestellt werden, ob es sich um eine positive oder negative Beschleunigung handelt. Im ersten Fall ist v2 größer als v1 (der Differenzenquotient also positiv) und im zweiten Fall ist v2 kleiner als v1 (der Differenzenquotient also negativ; t2-t1 ist immer positiv, da t2 immer größer als t1 ist).

Bei einer Rückwärtsfahrt des Kraftfahrzeuges wird das aktuell gemessene Messsignal eines jeden Höhensensors 16 bis 22, das an die Zentraleinheit 10 übermittelt wird, in Richtung des Sollniveaus korrigiert, um unnötige Regelvorgänge in der Luftfederungsanlage zu vermeiden.

Zunächst wird erläutert, wie eine Korrektur vorgenommen wird, die ausschließlich von der Geschwindigkeit abhängt: Wird an die Zentraleinheit 10 von der Einheit 30 beispielsweise die Geschwindigkeit v1 übermittelt, so wird von dem Messsignal hmess des Höhensensors 16 ein Korrekturwert hkv1 hinzuaddiert, der das Messsignal des Höhensensors in Richtung des Sollniveaus korrigiert Demzufolge bestimmt sich das korrigiert Messsignal hkorr wie folgt:

$$hkorr = hmess + hkv1 \qquad (1)$$

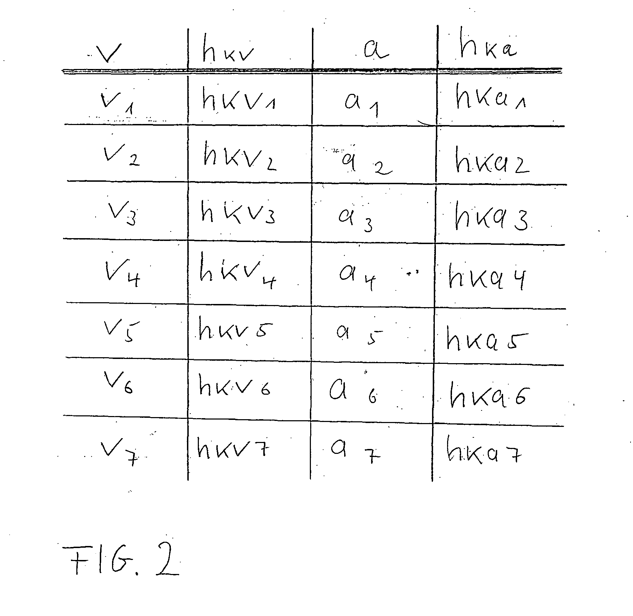

Hierbei wird der Korrekturwert hkv1 einer Tabelle entnommen, die in der Zentraleinheit 10 gespeichert und schematisch in der Figur 2 dargestellt ist. Der Korrekturwert hkv1 wird bei der Kalibrierung der Tabelle vorzugsweise so festgelegt, dass das nach der obigen Formel berechnete korrigierte Messsignal hkorr dem Messsignal entspricht, das der Höhensensor 16 anzeigen würde, wenn das Kraftfahrzeug einen durchschnittlichen Beladungszustand aufweist und sich im Sollniveau befindet. Dies führt dann bei einer Rückwärtsfahrt mit einer konstanten Geschwindigkeit v zu Folgendem: Weist das Kraftfahrzeug tatsächlich die durchschnittliche Beladung auf, so entspricht das nach (1) berechnete korrigierte Messsignal dem Messsignal, das der Höhensensor 16 bei einem Stillstand des Kraftfahrzeuges anzeigen würde und eine Regelung wird durch die Luftfederungsanlage nicht vorgenommen (obwohl der Fahrzeugaufbau aufgrund der Rückwärtsfahrt tatsächlich vom Sollniveau abweicht). Sollte also z. B. aufgrund der Rückwärtsfahrt der Fahrzeugaufbau angehoben worden sein (in diesem Fall sind die Werte hkv negativ), so wird der Fahrzeugaufbau während der Rückwärtsfahrt nicht abgesenkt, so dass nach Abschluss in der Rückwärtsfahrt ein Anheben des Fahrzeugaufbaus unterbleiben kann. Somit werden unnötige Regelvorgänge in der Luftfederungsanlage unterdrückt. Entsprechendes gilt, wenn der Fahrzeugaufbau sich während der Rückwärtsfahrt absenkt. Auf entsprechende Art und Weise wird in der Zentraleinheit 10 für die anderen Höhensensoren 16 bis 22 vorgegangen, d. h. für jeden Höhensensor ist eine Tabelle wie in der Figur 2 gezeigt gespeichert.

Weicht der Beladungszustand des Kraftfahrzeuges aufgrund einer starken Zuladung jedoch von dem durchschnittlichen Beladungszustand ab, so entspricht das nach (1) berechnete korrigierte Messsignal nicht dem Messsignal, das der Höhensensor 16 bei einem Stillstand des Kraftfahrzeuges anzeigen würde, sondern liegt aufgrund des Beladungszustandes des Kraftfahrzeuges darunter. In diesem Fall wird durch die Luftfederungsanlage im Bereich des Höhensensors 16 und der Luftfeder 2a der Fahrzeugaufbau angehoben, bis das korrigierte Messsignal hkorr das Sollniveau anzeigt. Durch diesen Regelvorgang wird also die Abweichung aus dem Sollniveau ausgeglichen, die ausschließlich auf die zusätzliche Beladung des Kraftfahrzeuges zurückzuführen ist. Entsprechend wird vorgegangen, wenn das Kraftfahrzeug stark entladen ist und aufgrund dessen der Beladungszustand vom durchschnittlichen Beladungszustand abweicht.

Wird von der Einheit 30 eine Geschwindigkeit vi übermittelt, die beispielsweise zwischen v1 und v2 liegt, so wird der zu dieser Geschwindigkeit gehörende Korrekturwert hkvi durch lineare Interpolation zwischen den Korrekturwerten hkv1 und hkv2 berechnet. Durch lineare Interpolation kann mit geringem Aufwand auch für eine zwischen den Geschwindigkeiten v1 und v2 liegende Geschwindigkeit ein exakter Korrekturwert berechnet werden. Entsprechend wird vorgegangen, wenn die übermittelte Geschwindigkeiten zwischen den Geschwindigkeiten v2 und v3 etc. liegt.

Im Folgenden wird erläutert, wie während der Rückwärtsfahrt des Kraftfahrzeuges die Messsignale eines jeden Höhensensors 16 bis 22 in Abhängigkeit der Beschleunigung des Kraftfahrzeuges korrigiert werden: Zunächst wird in der Zentraleinheit 10 die monentane Beschleunigung des Kraftfahrtzeuges wie oben bereits erläutert berechnet. Danach wird für die z. B. berechnete Beschleunigung al für den Höhensensor 16 aus der in der Figur 2 gezeigten Tabelle ein Korrekturwert hka1 entnommen. In der Zentraleinheit wird dann das korrigierte Messsignal hkorr wie folgt berechnet:

$$hkorr = hmess + hka1 \qquad (2)$$

Auch hier wird hka1 bei der Kalibrierung der Tabelle so festgelegt, dass das berechnete korrigierte Messsignal hkorr dem Messsignal entspricht, das der Höhensensor 16 anzeigen würde, wenn das Kraftfahrzeug einen durchschnittlichen Beladungszustand aufweist und sich im Sollniveau befindet. Entsprechend wird für die Höhensensoren 18 bis 22 vorgegangen. Die Luftfederungsanlage wird auch hier anhand der berechneten Werte hkorr geregelt. Durch dieses Vorgehen können unnötige Regelvorgänge in Folge einer Beschleunigung des Kraftfahrzeuges in der Luftfederungsanlage vermieden werden. Wenn der tatsächliche Beladungszustand des Kraftfahrzeuges vom durchschnittlichen Beladungszustand abweicht, wird auch bei einer Beschleunigung analog vorgegangen, wie es bereits oben im Zusammenhang mit der Geschwindigkeit erläutert worden ist. Falls die Momentanbeschleunigung des Kraftfahrzeuges zwischen den in der Tabelle in Figur 2 aufgeführten Werten liegt, werden die entsprechenden Korrekturwerte durch lineare Interpolation bestimmt, wie oben bereits im Zusammenhang mit der Geschwindigkeit erläutert.

**Beispiel:** Das Kraftfahrzeug weist den durchschnittlichen Beladungszustand auf und fährt mit einer positiven Beschleunigung rückwärts. In diesem Fall senkt sich der Fahrzeugaufbau des Kraftfahrzeuges aufgrund der positiven Beschleunigung im Bereich der Vorderachse unter das Sollniveau ab und im Bereich der Hinterachse wird der Fahrzeugaufbau über das Sollniveau angehoben. Demzufolge zeigen die Höhensensoren 16 und 18 ein Messsignal hmess an, das unterhalb des Sollniveaus liegt, und die Höhensensoren 20 und 22 zeigen ein Messsignal hmess an, das oberhalb des Sollniveaus liegt. Für die Höhensensoren 16 und 18 sind die zu der positiven Beschleunigung al gehörenden Korrekturwerte hka1 demzufolge positiv und bei der Kalibrierung der Tabelle in Figur 2 so festgelegt worden, dass bei der Berechnung des korrigierten Messsignals nach (2) sich ein Wert ergibt, den die Höhensensoren 16 und 18 anzeigen würden, wenn sich das Kraftfahrzeug im Sollniveau befindet. Für die Höhensensoren 20 und 22 ergeben sich bei der Beschleunigung al in diesem Fall hingegen negative Korrekturwerte hka1, die ebenfalls bei der Kalibrierung so festgelegt werden, dass sich bei der Berechnung des korrigierten Messsignals hkorr nach (2) ebenfalls ein Messsignal ergibt, das die Höhensensoren 20 und 22 anzeigen würden, wenn sich das Kraftfahrzeug im Bereich der Hinterachse im Sollniveau befindet.

Das Kraftfahrzeug wird aufgrund der korrigierte Messsignale geregelt, die für alle vier Höhensensoren 16 bis 22 das Sollniveau anzeigen. Demnach unterbleibt während der Rückwärtsfahrt des Kraftfahrzeuges mit einer positiven Beschleunigung eine Regelung innerhalb der Luftfederungsanlage.

Nach Abschluss der positiven Beschleunigung (wenn sich das Kraftfahrzeug also z. B. mit konstanter Geschwindigkeit fortbewegt) wird die Luftfederungsanlage wieder normal geregelt. Weist das Kraftfahrzeug während der Rückwärtsfahrt mit einer positiven Beschleunigung einen Beladungszustand auf, der von dem durchschnittlichen Beladungszustand abweicht, so werden durch die Korrekturwerte hka lediglich die Effekte berücksichtigt, die auf die Beschleunigung zurückzuführen sind, und dieAbweichungen vom Sollniveau des Fahrzeugaufbaus, die auf den Beladungszustand zurückzuführen sind, werden von der Luftfederungsanlage erfasst und durch eine entsprechende Regelung ausgeglichen.

Liegt während der Rückwärtsfahrt eine negative Beschleunigung vor, so wird dementsprechend der Fahrzeugaufbau im Bereich der Vorderachse über das Sollniveau angehoben und im Bereich der Hinterachse unter das Sollniveau abgesenkt, so dass das oben Gesagte analog nur mit entsprechend geänderten Vorzeichen gilt (d. h. die Korrekturwerte hka für die Höhensoren 16 und 18 sind negativ und die Korrekturwerte hka für die Höhensensoren 20 und 22 sind positiv).

Sollen während der Rückwärtsfahrt des Kraftfahrzeuges die Messsignale sowohl in Abhängigkeit der Geschwindigkeit des Kraftfahrzeuges als auch in Abhängigkeit der Beschleunigung des Kraftfahrzeuges korrigiert werden, so berechnen sich die einzelnen korrigierten Messsignale hkorr wie folgt:

$$hkorr = hmess + hkvi + hkaj \qquad (3)$$

Hierbei stellt hkvi den Korrekturwert für die momentane Geschwindigkeit und hkaj den Korrekturwert für die momentane Beschleunigung dar und werden der in der Figur 2 gezeigten Tabelle direkt oder wie oben erläutert durch lineare Interpolation entnommen. Auch hier gilt für Beladungszustände, die vom durchschnittlichen Beladungszustand abweichen, das bereits oben Erläuterte.

Die Korrektur der Messwerte werden für jeden Höhensensor in der Niveauregelanlage kontinuierlich oder in zeitlichen Abständen vorgenommen, die vorzugsweise zwischen 0,1 und 10 Sekunden liegen.

Nach Abschluss der Rückwärtsfahrt (wenn das Fahrzeug also stillsteht oder vorwärts fährt) wird die Luftfederungsanlage wieder normal geregelt. Durch das erfindungsgemäße Verfahren werden während der Rückwärtsfahrt eines Kraftfahrzeuges Anhebungen oder Absenkungen eines Fahrzeugaufbaus unterdrückt, die auf die Dynamik des Kraftfahrzeuges zurückzuführen sind.

**Patentansprüche**

1.  Verfahren zur Regelung einer Niveauregelanlage, mit der der Abstand eines Fahrzeugaufbaus eines Kraftfahrzeuges zu mindestens einer Achse des Kraftfahrzeuges mit Hilfe mindestens eines Höhensensors, der den Abstand zwischen dem Fahrzeugaufbau und der Fahrzeugachse misst, auf ein Sollniveau geregelt wird, **dadurch gekennzeichnet, dass**

    - die Fahrtrichtung des Kraftfahrzeuges bestimmt wird und
    - bei einer Rückwärtsfahrt des Kraftfahrzeuges das Messsignal eines jeden Höhensensors in Richtung des Sollniveaus korrigiert wird.

2.  Verfahren nach Anspruch 1, **dadurch gekennzeichnet, dass** die Korrektur der Messsignale eines jeden Höhensensors in Abhängigkeit von der Geschwindigkeit des Kraftfahrzeuges vorgenommen wird.

3.  Verfahren nach einem der Ansprüche 1 bis 2, **dadurch gekennzeichnet, dass** die Beschleunigung des Kraftfahrzeuges gemessen wird und dass

    - bei einer positiven Beschleunigung das Messsignal in Richtung des Sollniveaus verringert wird, wenn der Höhensensor den Abstand zwischen Fahrzeugaufbau und Hinterachse misst, bzw. das Messsignal entsprechend vergrößert wird, wenn der Höhensensor den Abstand zwischen Fahrzeugaufbau und Vorderachse misst
    - bei einer negativen Beschleunigung das Messsignal in Richtung des Sollniveaus verringert wird, wenn der Höhensensor den Abstand zwischen Fahrzeugaufbau und Vorderachse misst, bzw. das Messsignal entsprechend vergrößert wird, wenn der Höhensensor den Abstand zwischen Fahrzeugaufbau und Hinterachse misst.

4.  Verfahren nach einem der Ansprüche 1 bis 3, **dadurch gekennzeichnet, dass** in der Zentraleinheit der Niveauregelanlage eine Tabelle gespeichert ist, in der für bestimmte rückwärtsgerichtete Geschwindigkeiten und/oder für bestimmte Beschleunigungen diese jeweils zugeordneten Korrekturwerte für die Messsignale eines jeden Höhensensors abgelegt sind.

5. Verfahren nach einem der Ansprüche 3 oder 4, **dadurch gekennzeichnet, dass** für nicht in der Tabelle enthaltene Geschwindigkeiten bzw. Beschleunigungen der Korrekturwert durch lineare Interpolation zwischen denjenigen Korrekturwerten bestimmt wird, die den Geschwindigkeiten bzw. Beschleunigungen zugeordnet sind, zwischen denen die aktuelle Geschwindigkeit bzw. Beschleunigung liegt.

6. Verfahren nach einem der Ansprüche 1 bis 5, **dadurch gekennzeichnet, dass** die Fahrtrichtung des Kraftfahrzeuges anhand der Getriebestellung festgestellt wird.

7. Verfahren nach einem der Ansprüche 1 bis 6, **dadurch gekennzeichnet, dass** die Beschleunigung des Kraftfahrzeuges bestimmt wird, indem zu zwei Zeitpunkten der Differenzenquotient aus den Geschwindigkeiten zu diesen Zeitpunkten und den Zeitpunkten bestimmt wird.

8. Verfahren nach einem der Ansprüche 1 bis 7, **dadurch gekennzeichnet, dass** die Messsignale eines jeden Höhensensors auf das Sollniveau korrigiert werden.

9. Verfahren nach einem der Ansprüche 1 bis 8, **dadurch gekennzeichnet, dass** eine Messung und Korrektur der Messsignale eines jeden Höhensensors kontinuierlich oder in einem zeitlichen Abstand vorgenomemn wird, der vorzugsweise zwischen 0,1 und 10 Sekunden liegt.

10. Niveauregelanlage, mit der der Abstand eines Fahrzeugaufbaus eines Kraftfahrzeuges zu mindestens einer Achse des Kraftfahrzeuges mit Hilfe mindestens eines Höhensensors, der den Abstand zwischen dem Fahrzeugaufbau und der Fahrzeugachse misst, auf ein Sollniveau geregelt wird, **dadurch gekennzeichnet, dass**

   - in einer Zentraleinheit der Niveauregelanlage die Fahrtrichtung des Kraftfahrzeuges bestimmt wird
   - in der Zentraleinheit bei einer Rückwärtsfahrt des Kraftfahrzeuges das Messsignal eines jeden Höhensensors in Richtung des Sollniveaus korrigiert wird.

# FIG. 1

| $v$ | $hkv$ | $a$ | $hka$ |
|-----|-------|-----|-------|
| $v_1$ | $hkv_1$ | $a_1$ | $hka_1$ |
| $v_2$ | $hkv_2$ | $a_2$ | $hka_2$ |
| $v_3$ | $hkv_3$ | $a_3$ | $hka_3$ |
| $v_4$ | $hkv_4$ | $a_4$ | $hka_4$ |
| $v_5$ | $hkv_5$ | $a_5$ | $hka_5$ |
| $v_6$ | $hkv_6$ | $a_6$ | $hka_6$ |
| $v_7$ | $hkv_7$ | $a_7$ | $hka_7$ |

FIG. 2

**Europäisches Patentamt**

# EUROPÄISCHER RECHERCHENBERICHT

Nummer der Anmeldung

EP 03 00 6689

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 401 053 A (SAHM DIETRICH ET AL) 28. März 1995 (1995-03-28) * Zusammenfassung; Abbildung 2 * --- | 1-10 | B60G17/00 B60G17/015 |
| A | DE 197 22 961 C (DAIMLER BENZ AG) 13. August 1998 (1998-08-13) * Anspruch 1; Abbildungen 1,3 * --- | 1-10 | |
| A | DE 43 05 958 A (BOSCH GMBH ROBERT) 1. September 1994 (1994-09-01) * Zusammenfassung; Abbildung 1 * --- | 1-10 | |
| A | EP 0 402 820 A (BARMAG BARMER MASCHF) 19. Dezember 1990 (1990-12-19) * Zusammenfassung; Anspruch 1; Abbildung 1 * ----- | 1-10 | |
| | | | RECHERCHIERTE SACHGEBIETE (Int.Cl.7) B60G |

Der vorliegende Recherchenbericht wurde für alle Patentansprüche erstellt

| Recherchenort | Abschlußdatum der Recherche | Prüfer |
|---|---|---|
| MÜNCHEN | 7. Mai 2003 | Bolte, U |

EPO FORM 1503 03.82 (P04C03)

**EP 1 371 508 A1**

**ANHANG ZUM EUROPÄISCHEN RECHERCHENBERICHT**
**ÜBER DIE EUROPÄISCHE PATENTANMELDUNG NR.**     EP 03 00 6689

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| US 5401053 | A | 28-03-1995 | DE | 4231641 A1 | 24-03-1994 |
| | | | FR | 2695875 A1 | 25-03-1994 |
| | | | GB | 2271746 A ,B | 27-04-1994 |
| DE 19722961 | C | 13-08-1998 | DE | 19722961 C1 | 13-08-1998 |
| | | | DE | 59803118 D1 | 28-03-2002 |
| | | | EP | 0881107 A2 | 02-12-1998 |
| DE 4305958 | A | 01-09-1994 | DE | 4305958 A1 | 01-09-1994 |
| | | | JP | 6286533 A | 11-10-1994 |
| EP 0402820 | A | 19-12-1990 | DE | 59004189 D1 | 24-02-1994 |
| | | | EP | 0402820 A2 | 19-12-1990 |

EPO FORM P0461

Für nähere Einzelheiten zu diesem Anhang : siehe Amtsblatt des Europäischen Patentamts, Nr.12/82